# EUROPEAN PATENT SPECIFICATION

(11) **EP 3 937 062 B1**
(45) Date of publication and mention of the grant of the patent: **10.04.2024**
(21) Application number: 21175442.9
(22) Date of filing: 21.05.2021
(51) Int. Cl.: G06K 7/00, G06K 19/077, H04B 5/00, H04W 64/00, H04W 88/06

(54) **ELECTRONIC TAG FOR DATA MANAGEMENT**
ELEKTRONISCHES ETIKETT ZUR DATENVERWALTUNG
ÉTIQUETTE ÉLECTRONIQUE POUR LA GESTION DE DONNÉES

(30) Priority: 09.07.2020 SE 2050864
(43) Date of publication of application: 12.01.2022
(73) Proprietor: Lumos Holdings US Acquisition Co., Rosemont, IL 60018 (US)
(72) Inventor: BENGTSSON, Henrik, Basingstoke, RG22 4SB (GB); RYDBERG, Jens, Basingstoke, RG22 4SB (GB); FREDLUND, Anders, Basingstoke, RG22 4SB (GB); HALLQVIST, Magnus, Basingstoke, RG22 4SB (GB); BOROWSKI, Jimmy, Basingstoke, RG22 4SB (GB); AFRIDI, Khalid, Basingstoke, RG22 4SB (GB)
(74) Representative: Neij & Lindberg AB

(56) References cited:
- US-A1- 2002 126 013
- US-A1- 2003 104 848
- US-A1- 2012 007 712
- US-A1- 2014 055 488
- US-A1- 2018 021 510
- US-B1- 9 864 882

## Description

### Technical Field

The present disclosure relates generally to electronic tags configured for short-range wireless transfer of an identifier to a receiving electronic device, as well as data management by use of such electronic tags.

### Background

Electronic tags are well-known and may be used for various identification purposes. The electronic tag may be based on radio-frequency identification (RFID) technology, in which radio waves are used to automatically identify electronic tags attached to objects. Such RFID tags are read by dedicated RFID readers. The RFID reader sends an interrogating signal to the tag, and the tag responds with its unique information. A specialized subset within the family of RFID technology is denoted near-field communication (NFC). Specifically, NFC is a branch of high-frequency (HF) RFID. NFC is designed to be a secure form of data exchange.

An alternative to using RFID technology is disclosed in US10699177, in which the electronic tag comprises a Bluetooth transmitter which is configured to broadcast data packets with an identifier. The transmission of data packets is triggered whenever a proximity sensor in the electronic tag signals presence of an object within a detection zone of the proximity sensor. This reduces power consumption of the electronic tag and prevents filling the air with data packets. A data collection system is exemplified in a gym environment, where electronic tags are attached to exercise devices, which are configured to transmit workout data to a server. A user checks in to an exercise device by bringing a user device within the detection zone, whereby the user device automatically receives data packets from the tag, extracts the identifier and transmits it to the server, which may thereby associate the user device with workout data generated and transmitted by the exercise device.

One shortcoming of US 10699177 is that the data packets may have limited space for the identifier, typically a few bytes, for example in low-power implementations of the tag using BLE advertisements according to the iBeacon^{™} protocol. The limited space may unfavorably restrict the number of unique identifiers that are available for use in the data collection system and may also preclude the use of certain standard identifier systems for assigning identifiers.

The prior art comprises electronic tags that have both an RFID component and a Bluetooth component.

US2003/0104848 discloses a hybrid tag which is awakened by presence of a pre-determined intensity RF signal from an RFID interrogator and is operated, based on demodulated data, to communicate by either RFID communication or by Bluetooth communication.

US2012/0007712 discloses an electronic tag which activates its Bluetooth transceiver when its RFID transceiver receives a low-frequency start signal, to thereby initiate encrypted communication over Bluetooth.

US9864882 discloses a battery-less tag which comprises an RF interface for harvesting energy from an incoming RF signal, for example a Bluetooth signal, cellular signal or Wi-Fi signal, to power an RFID transceiver in the tag, and optionally a Bluetooth transceiver.

US2002/0126013 discloses a reader device that comprises an RFID radio interface and a Bluetooth radio interface to enable location determination of both RFID tags and Bluetooth devices.

### Summary

It is an objective to at least partly overcome one or more limitations of the prior art.

One objective is to enable a user device to automatically and wirelessly receive an identifier from an electronic tag.

One objective is to expand the available identifier systems that may be used for assigning identifiers to electronic tags, for example for use in a data management system.

The invention is defined by the independent claims, embodiments thereof being defined by the dependent claims.

According to some aspects of the present disclosure, by combining Bluetooth and RFID transmissions, size limitations of Bluetooth transmissions are overcome and automatic transfer of an identifier from an electronic tag to a portable device is enabled. The available space for the identifier is increased by including the identifier in the RFID transmission (second data packet), and automatic operation may be achieved by automatically activating an RFID receiver in the portable device upon receipt of a Bluetooth transmission (first data packet).

Still other objectives, aspects and technical effects, as well as embodiments and features will appear from the following detailed description, from the attached claims as well as from the drawings.

### Brief Description of Drawings

Embodiments will now be described in more detail with reference to the accompanying schematic drawings.
FIG. 1 illustrates an example electronic tag that separately transmits first and second data packets for receipt by an example user equipment.
FIGS 2A-2C illustrates an example docking operation of user equipment onto an electronic tag.
FIG. 3 is a block diagram of an example electronic tag.
FIG. 4 is a block diagram of example user equipment.
FIGS 5A-5B are flow charts of example methods of operating user equipment based on data from an electronic tag.
FIG. 6 illustrates data flow in an example data management system comprising user equipment and an electronic tag.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

It will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more," even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments. The term "and/or" comprises any and all combinations of one or more of the associated listed elements.

It will furthermore be understood that although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like numerals refer to like elements throughout.

Before describing embodiments in more detail, a few definitions will be given.

As used herein, "electronic tag" refers to any device capable of being attached to another device and containing electronic circuitry for wireless transmission of data.

As used herein, "transmitter" refers to any device capable of transmitting data. Thus, the term "transmitter" also encompasses a transceiver.

As used herein, "receiver" refers to any device capable of receiving data. Thus, the term "receiver" also encompasses a transceiver.

As used herein, Bluetooth or "BT" refers to wireless communication in compliance with a Bluetooth SIG standard in any version. For the avoidance of doubt, Bluetooth also includes the Bluetooth Low Energy standard, also known as Bluetooth LE and Bluetooth Smart.

As used herein, RFID (Radio-Frequency IDentification) refers to the established and well-known technique of using electromagnetic or electrostatic coupling in the radio frequency portion of the electromagnetic spectrum to transfer an identifier from a first device (RFID tag) to a second device (RFID reader). The RFID reader, denoted "receiver" herein, uses radio frequency waves to transmit an interrogating signal that activates the RFID tag. Once activated, the RFID tag sends a return wave back to the RFID reader, where it is translated into data, for example an identifier of the RFID tag. The RFID tag comprises a transponder, denoted "transmitter" herein, which is configured to generate the return wave. The RFID tag may be active or passive. An active RFID tag has its own power source, often a battery. A passive RFID tag is powered by the interrogating signal from the RFID reader, by the interrogating signal inducing an electrical current in the transponder of the RFID tag.

As used herein, NFC (Near-Field Communication) refers to a subset of RFID technology, specifically High-Frequency (HF) RFID. NFC is, for example, standardized in ECMA-340 and ISO/IEC 18092 and in a plurality of standards defined by the NFC Forum. NFC has a maximum transmission range of about 20 cm, but the transmission range is typically a few cm in practice. By analogy with RFID, data may be transferred from a first device ("NFC tag") to a second device ("NFC reader").

As used herein, "transmission range" of a transmitter refers to the reach of a signal transmitted by the transmitter, where the reach may be given by the average distance at which the strength of the signal equals a detection threshold for reliable detection by a receiver.

As used herein, "portable electronic device" ("PED") is synonymous with "user equipment" ("UE") and comprises any electronic device which is capable of being carried, held or worn by a user. Such portable electronic devices include handheld devices, such as mobile phones, smartphones, tablets, laptops, gaming consoles, etc., as well as wearable computers ("wearables"), such as smart glasses, smart watches, headsets, badges, bracelets, fitness trackers, etc. The portable electronic devices may be generic devices capable of performing different tasks, for example by executing different application programs, or specialized devices tailored to perform a single task.

As used herein, "proximity sensor" refers to any device capable of detecting presence of an object within a certain distance, without requiring physical contact with the object. As used herein, a region in which the proximity sensor is capable of detecting presence of objects is denoted "detection zone". The proximity sensor may implement any conceivable technique for detecting the object, for example by emitting a beam or field of electromagnetic radiation (including infrared radiation) or sound waves (including ultrasound) and analyzing the field or a return signal. The proximity sensor may be configured to detect all objects within the detection zone (indiscriminate detection), or only objects having a specific property (discriminate detection).

Embodiments described in the following are directed to ensuring proper "docking" of a PED to an electronic tag, with the docking involving a wireless transfer of a tag identifier (tag ID) from the electronic tag to the PED when the PED is brought in sufficient proximity of the electronic tag. Such a docking operation constitutes an intuitive and user-friendly way for a user to interact with electronic tags and may be implemented to trigger, based on the tag ID, any dedicated function in the PED and/or in a computer device connected to the PED.

The embodiments will be motivated with reference to the proposed data collection system in US10699177, which is configured to enable a docking operation as described hereinabove. Generally, it is desirable for the docking operation be automatic and performed without user intervention apart from bringing the PED near the electronic tag. It is also generally desirable to achieve this performance on all relevant platforms or operating systems for PEDs. For many types of PEDs, the dominating platforms include Android^{™} and iOS^{™}. US 10699177 proposes to transfer a tag ID from the electronic tag by transmission (broadcasting) of BLE packets to the PED, which is possible on both platforms. However, one limitation of iOS is that it only allows the PED to automatically scan for BLE packets that comply with the iBeacon standard that is defined by Apple, Inc. This means that only BLE packets that comply with the iBeacon standard may be received without user intervention. At present, the size of the tag ID is limited to 4 bytes in the BLE packet according to the iBeacon standard. This means that the number of unique tag IDs in the data collection system in US 10699177 is limited to about 4 billon (2³²), which may be a limiting factor for development, deployment and dissemination of the system. This may be especially true if the tag IDs are based on a standardized identifier system comprising a huge number of unique identifiers and if a subset of the standardized identifier system is assigned for tag IDs. In NFC systems currently supported by Android and iOS, the available space for the tag ID in the data packets is not so limited. However, another limitation of iOS is that it requires the NFC reader on the PED to be manually activated via a user interface on the PED. This means that the PED is unable to complete the docking operation without user intervention. The foregoing obstacles are at least partly overcome by embodiments presented below.

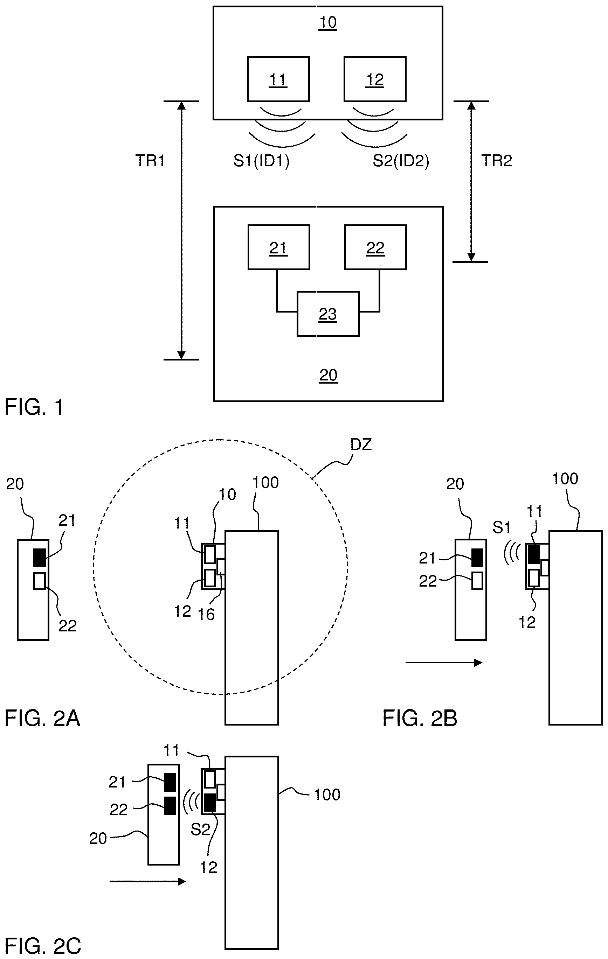

FIG. 1 illustrates an example combination of an electronic tag 10 and a PED 20 in accordance with an embodiment. The tag 10 comprises a BLE transmitter 11 and an NFC transmitter 12. The BLE transmitter 11 is operable to transmit a first signal S1 comprising data packets ("BLE packets") that include a first identifier ID1, for example in compliance with the iBeacon protocol. The NFC transmitter 12 is operable to transmit a second signal S2 comprising data packets ("NFC packets") that include a second identifier ID2. The PED 20 comprises a BLE receiver 21, an NFC receiver 22 and a control unit 23 which is connected to the receivers 21, 22. The control unit 23 comprises logic for controlling the operation of the receiver 21, 22. This configuration of the tag 10 enables the PED 20 to be designed to overcome the above-described obstacles when using iOS. By transmitting the tag ID as ID2, that is in the NFC packets, the limitation on size of the tag ID is overcome and ID2 may uniquely identify a much larger number of individual tags. By transmitting ID1 in the BLE packets, the PED 20 may be configured to automatically simulate a user activation of the NFC receiver 22 to overcome the need for user intervention on the PED 20 to manually activate the NFC receiver 22. It is realized that ID1 may be a generic identifier that may be transmitted by several or even all tags 10 to trigger the PED 20 to activate its NFC receiver 22 and that the available space for ID1 in BLE packets, even those complying with the iBeacon protocol, is sufficient to accommodate such a generic identifier.

In some embodiments, ID2 may comprise a MAC address, which has been assigned to the respective tag. MAC addresses are given by a 48-bit address space (EUI-48) or a 64-bit address space (EUI-64). To represent a MAC address, ID2 may be required to comprise 48 or 64 bits, which if not possible with BLE packets, is enabled by the tag 10 in FIG. 1.

FIGS 2A-2C illustrate a docking operation of the PED 20 in which the PED 20 is brought in proximity of the tag 10, which is attached to a device 100. The device 100 may, for example, be an exercise device as disclosed in aforesaid US10699177. In FIGS 2A-2C, filled squares indicate activated transmitters/receivers and open squares indicate disabled transmitters/receivers. FIG. 2A presumes that the tag 10 comprises a proximity detector 16 with a detection zone DZ and that the default state of the tag 10 is a low-power state in which both transmitters 11, 12 are deactivated and neither signal S1 nor signal S2 is transmitted by the tag 10. To minimize the need for user intervention during the docking operation, the PED 20 may be operated, by default or through user selection, with its BLE receiver 21 activated to intercept BLE packets. Thus, in FIG. 2A, with the PED 20 being located outside the detection zone DZ, the tag 10 is in its low-power state and does not transmit any signals. Depending on implementation, the detection zone DZ may extend to a distance of 1-100 cm from the tag 10, or even longer. In FIG. 2B, the PED 20 is moved into the detection zone DZ, as indicated by an arrow, causing the tag 10 to activate its BLE transmitter 11 to transmit the first signal S1 with ID1. When the antenna of the BLE receiver 21 is within the transmission range of the BLE transmitter 11, the BLE receiver 21 intercepts S1. The PED 20 extracts and evaluates ID1. Depending on ID1, the PED 20 may then activate the NFC receiver 22, as indicated in FIG. 2C. The NFC receiver 22 thereby transmits an interrogation signal. The NFC transmitter 12, on the other hand, is inherently operable to transmit S2 at all times and, as shown in FIG. 2C, is automatically activated to transmit S2 when receiving the interrogation signal from the NFC receiver 22. The PED 20 then extracts and evaluates ID2, and the docking operation is complete. Subject to the evaluation, the PED 20 may perform a predefined action, as exemplified further below.

Reverting to FIG. 1, it may be advantageous to set the transmission range TR1 of the BLE transmitter 11 in relation to the transmission range TR2 of the NFC transmitter 12. In practice, TR2 is typically less than 10 cm, and often less than 5 cm. On the other hand, TR1 may be several hundreds of meters for a BLE transmitter. It is understood from FIGS 2A-2C that if TR1 is too large, for example much larger than TR2, the NFC receiver 22 may be activated even if there is no intention of the user of the PED 20 to perform a docking operation. This will increase the computational load on the PED 20 and increase its power consumption. In some embodiments, the tag 10 is configured with a transmission range TR1 of the same order of magnitude as the transmission range TR2. This may be achieved by controlling the BLE transmitter 11 to reduce the power of the first signal S1. In some embodiments, TR1 is set to be less than about 20, 15, 10 or 5 times TR2. In a practical setting, it may be desirable for both TR1 and TR2 to be less than about 60, 50, 40, 30, 20, or 10 centimeters. For smaller TR1 and TR2, the docking operation becomes more spatially and temporally precise. It may also be noted that reducing the output power of the BLE transmitter 11 has the additional benefit of reducing the power consumption of the tag 10.

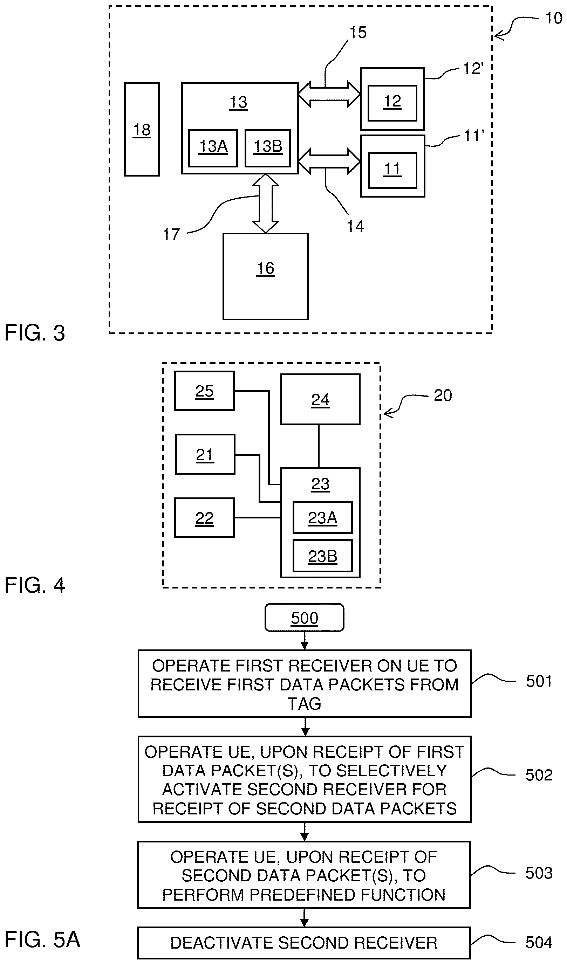

FIG. 3 is a block diagram of an example electronic tag 10 in accordance with an embodiment. The components illustrated in FIG. 3 may be located in a housing which is indicated by dashed lines. In the illustrated example, the tag 10 comprises a Bluetooth (BT) module 11', which includes the BLE transmitter 11 and, for example, an antenna (not shown). The BT module 11' may, but need not, also be or include a BLE receiver (not shown). The tag 10 further comprises an NFC module 12', which includes the NFC transmitter 12, for example implemented as a passive or active NFC transponder. The tag 10 further comprises a control unit 13, which is configured to implement logic for controlling the tag 10. In the illustrated example, the control unit 13 comprises a combination of a processor 13A and a memory 13B. The memory 13B may store program instructions for execution by the processor 13A for implementing the operation of the control unit 13. The program instructions may be supplied to the processor 13A on a computer-readable medium, which may be a tangible (non-transitory) product (for example, magnetic medium, optical disk, read-only memory, flash memory, etc.) or a propagating signal. The processor 13A may be a generic processor, for example a microprocessor, microcontroller, CPU, DSP (digital signal processor), GPU (graphics processing unit), etc., or a specialized processor, such as an ASIC (application specific integrated circuit) or an FPGA (field programmable gate array), or any combination thereof. The memory 13B may include volatile and/or non-volatile memory such as read only memory (ROM), random access memory (RAM) or flash memory.

The control unit 13 is electrically connected by wiring 14 to the BT module 11' and is operable to cause the BT module 11' to transmit signal S1. The control unit 13 may also, for example if the NFC transmitter 12 is of the active type, be electrically connected by wiring 15 to the NFC module 12'. Depending on implementation, the identifiers ID1, ID2 may be stored in the respective module 11', 12' or in the memory 13B of the control unit 13.

In the illustrated example, the tag 10 further comprises a proximity detector or sensor 16, which is electrically connected by wiring 17 to the control unit 13. The control unit 13 may be configured to cause the BT module 11' to activate the BLE transmitter 11, whenever a signal from the proximity sensor 16 indicate an object within the detection zone (cf. DZ in FIG. 2A). While the provision of the proximity sensor 16 may reduce the power consumption of the tag 10, it is conceivable to omit the proximity sensor 16 and instead configure the tag 10 to repeatedly and continuously transmit the signal S1. The tag 10 further comprises a power source 18, for example a battery or a fuel cell, for supplying power to the control unit 13 and the BT module 11', and possibly to the NFC module 12' and the proximity sensor 16.

FIG. 4 is a block diagram of an example PED 20 for use in embodiments. The PED 20 comprises the BLE receiver 21, for example implemented on a BT chip, and the NFC receiver 22, for example implemented as an NFC reader. The PED 20 further comprises a control unit 23, which is configured to implement logic for controlling the PED 20. In the illustrated example, the control unit 23 comprises a combination of a processor 23A and a memory 23B. The memory 23B may store program instructions for execution by the processor 23A for implementing the operation of the control unit 23. The program instructions may be supplied to the processor 23A on a computer-readable medium, which may be a tangible (non-transitory) product (for example magnetic medium, optical disk, read-only memory, flash memory, etc.) or a propagating signal. The processor 23A may be a generic processor, for example a microprocessor, microcontroller, CPU, DSP (digital signal processor), GPU (graphics processing unit), etc., or a specialized processor, such as an ASIC (application specific integrated circuit) or an FPGA (field programmable gate array), or any combination thereof. The memory 23B may include volatile and/or non-volatile memory such as read only memory (ROM), random access memory (RAM) or flash memory. In the illustrated example, the PED 20 further comprises a feedback unit 24 for providing one or more of audible, visible or tactile feedback to the user. Such a feedback unit 24 may comprise one or more of a speaker, a buzzer, a vibrator, a display, a touch screen, an indicator lamp, etc. As shown, the PED 20 may also comprise a communication device 25 for wireless or wired data transfer over a network, such as a WAN, LAN, PAN or any combination thereof.

Although embodiments have been described with reference to BLE and NFC, the present disclosure is not limited to these specific wireless technologies. Corresponding technical advantages may be achieved for other combinations of wireless short-range technologies, including but not limited to a combination of any Bluetooth technology with any RFID technology. In further examples, any one of the transmitters 11, 12 in the tag 10, and correspondingly the receivers 21, 22 in the PED 20, may be configured for communication by Zigbee, Z-wave, ambient backscatter communication (ABC), WiFi, etc. Thus, in some embodiments, both of the transmitters 11, 12 may be activated by the control unit 13 to transmit the respective signal S1, S2. To limit the power consumption of the tag 10, the transmitter 12 may be activated to transmit S2 concurrent with or subsequent to the transmitter 11 being activated to transmit S1.

With further reference to FIG. 1, in a generic embodiment, the electronic tag 10 comprises a first transmitter 11 configured in accordance with a first short-range wireless technology and operable to transmit first data packets comprising a first identifier ID1, and a second transmitter 12 configured in accordance with a second short-range wireless technology, which is different from the first short-range wireless technology. The second transmitter 21 is operable to transmit second data packets comprising a second identifier ID2, which is different from the first identifier ID1 Similarly, in a generic embodiment, the PED 20 comprises a first receiver 21 configured to receive one or more of the first data packets transmitted by the electronic tag 10, and a second receiver 22 configured to receive one or more of the second data packets transmitted by the electronic tag 10. The skilled person understands that the embodiments and examples described in the foregoing are equally applicable for other combinations of first and second short-range wireless technologies.

FIG. 5A is a flowchart of a method 500 for operating the PED 20 in accordance with an embodiment. The method 500 may be performed by the control unit 23 (FIG. 1) and may be applied irrespective of the combination of wireless short-range technologies. The method will therefore be described with respect to the above-mentioned generic embodiment. In step 501, the first receiver 21 on the PED 20 is operated to receive one or more first data packets transmitted by the first transmitter 11 in the tag 10. In step 502, the PED 20 is operated to selectively activate the second receiver 22. The term "selectively activate" may imply that the second receiver 22 is activated provided that at least one first data packet is accepted by a validation process in the PED 20. In step 503, which is performed when the PED 20 has received one or more second data packets through the second receiver 22, the PED 20 is operated to perform a predefined action. The predefined action may be selected based on ID2 in the second data packet(s) or may be a default action performed by the PED 20 whenever ID2 is received. In step 504, the PED 20 may deactivate the second receiver 22. Step 504 may be performed when the PED 20 has received the second data packet(s) and/or has performed the predefined action, or after expiry of a predefined time period ("time-out period") from the activation of the second receiver 22 in step 502.

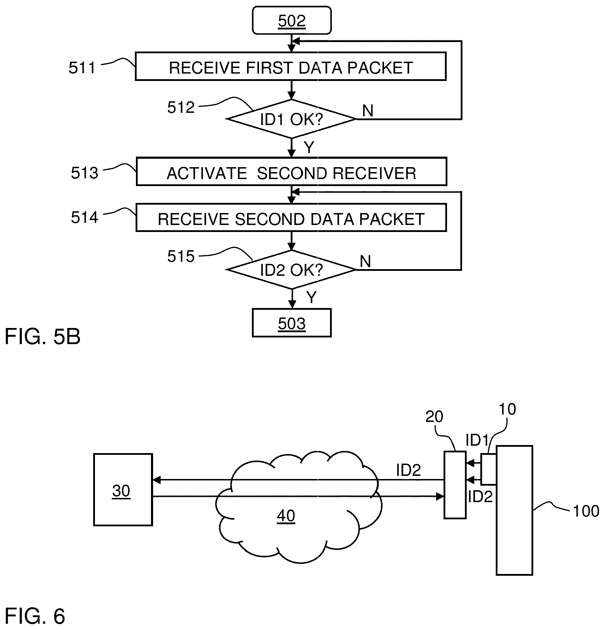

FIG. 5B is a flowchart of step 502 in accordance with an embodiment. In step 511, the first receiver 21 receives a first data packet. In step 512, the PED 20 processes the first data packet to extract ID1 and then evaluates ID1 in relation to a first validation criterion. In one example, the first validation criterion may stipulate that ID1 should have a specific value or fall within a specific range of values. In another example, the first validation criterion may stipulate that a first evaluation function, when operated on ID1, should return a value in a specific range. The first validation criterion may further stipulate that the strength of signal S1, when the first data packet is received, should exceed a threshold value. If the first validation criterion is not satisfied, step 512 may proceed to wait for another first data packet. Otherwise, step 512 may proceed to step 513, in which the PED 20 activates the second receiver 22. In step 514, the second receiver 22 receives a second data packet. In step 515, the PED 20 processes the second data packet to extract ID2 and then evaluates ID2 in relation to a second validation criterion. The second validation criterion may stipulate that ID2 should fall within a specific range of values and/or that a second evaluation function, when operated on ID2, should return a value in a specific range. If the second validation criterion is not satisfied, step 515 may proceed to wait for another second data packet. Otherwise, step 512 may proceed to step 503. In a variant, the second validation by step 515 is omitted and all second data packets are presumed to contain a valid ID2.

FIG. 6 is a schematic view of an example data management system in accordance with embodiments. The data management system comprises one or more electronic tags 10 (one shown), which may be attached to a respective device 100 as shown, one or more PEDs 20 (one shown), and one or more computer devices 30 (one shown). The PED 20 is operable to communicate with the computer device 30 over a network 40 by use of a communication device (cf. 25 in FIG. 4). As described in the foregoing, the PED 20 receives ID1 and ID2 from the tag 10. Depending on implementation, the PED 20 may perform any of a plurality of action upon receipt of ID2. Such actions may include providing a confirmation message to the user via a feedback device (cf. 24 in FIG. 4), store ID2 or part thereof in internal memory (cf. 23B in FIG. 4), open or execute one or more files stored in internal memory, open a specific web page in a browser on the PED 20, or transmit ID2 or part thereof to the computer device 30 over the network 40. After transmitting ID2 or part thereof, the PED 20 may wait for the computer device 30 to return a confirmation. The computer device 30 may also return one or more files, which may then be executed or opened by the PED 20. The files may, for example, include one or more media files comprising any one or pictures, music, audios, videos, documents etc.

The data management system in FIG. 6 may be applied in a variety of use cases. In one example, described in aforesaid US 10699177, tags 10 may be attached to exercise devices 100 in a gym environment, and the data management system may be configured to collect workout data associated with exercise devices and users/PEDs. In another example, also described in aforesaid US 10699177, tags 10 may be attached to devices 100 in an office environment, and the data management system may be configured to collect information about the need for service or maintenance of the respective device. In another example, tags 10 may be attached to labels or signs at a museum, monument, historical site or other attraction, to allow the user of a PED 20 to be presented with further information on the PED 20 by docking the PED 20 to the tag 10. In another example, tags 10 may be arranged at entrance points to a confined space such as a building, an office space, etc., to allow the user to check in to the confined space by performing the docking operation. In one example, checking in may comprise the PED 20 transmitting ID2, or part thereof, together with an identifier of the PED 20 or its user to the computer device 30. In another example, checking in may comprise validating a ticket purchased by the user and stored in the PED 20 or in the computer device 30. In a service environment, tags 10 may be arranged on signs with names and/or photographs of staff, to allow the user to be presented with further information about, for example, the skills or experience of a specific individual by performing the docking operation on one of the tags. For example, the staff may be personal trainers in a gym environment.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements.

Further, while operations are depicted in the drawings in a particular order, this should not be understood as requiring that such operations be performed in the particular order shown or in sequential order, or that all illustrated operations be performed, to achieve desirable results.

## Claims

1. An electronic tag, comprising:
a Bluetooth transmitter (11) which is operable to transmit first data packets;
an RFID transmitter (12) which is operable to transmit second data packets;
wherein the first data packets comprise a first identifier (ID1) and the second data packets comprise a second identifier (ID2), and
wherein the first identifier (ID1) is smaller in size, given by number of bits, than the second identifier (ID2),
**characterized in that** the second identifier (ID2) is not included in the first data packets.

2. The electronic tag of claim 1, wherein the first identifier (ID1) is a generic identifier for a plurality of electronic tags, and the second identifier (ID1) is a dedicated identifier for the electronic tag.

3. The electronic tag of any preceding claim, wherein the second identifier (ID2) comprises a MAC address.

4. The electronic tag of any preceding claim, wherein the Bluetooth transmitter (11) has a first wireless transmission range (TR1), and the RFID transmitter has a second wireless transmission range (TR2), and wherein the first wireless transmission range (TR1) is less than 20 times the second wireless transmission range (TR2).

5. The electronic tag of claim 4, wherein the first and second wireless transmission ranges (TR1, TR2) are less than 60 centimeters.

6. The electronic tag of any preceding claim, wherein the RFID transmitter (12) is operated to transmit the second data packets concurrent with or subsequent to the electronic tag operating the Bluetooth transmitter (11) to transmit the first data packets.

7. The electronic tag of any preceding claim, further comprising a proximity sensor (18) configured to detect presence of an object within a detection zone (DZ), wherein the electronic tag comprises a control unit (13), which is connected to the proximity sensor (18) and the Bluetooth transmitter (11) and is configured to selectively, when the proximity sensor (18) detects presence of the object within the detection zone (DZ), activate the Bluetooth transmitter (11) to transmit the first data packages.

8. A portable electronic device, comprising:
a Bluetooth receiver (21) which is operable to receive a first data packet transmitted by an electronic tag (10);
an RFID receiver (22) which is operable to receive a second data packet transmitted by the electronic tag (10); and
a control unit (23) connected to the Bluetooth receiver (21) and the RFID receiver (22)
**characterized in that** the control unit (23) is configured to selectively activate the RFID receiver (22) upon receiving the first data packet, wherein the control unit (23) is configured to, upon said receiving the first data packet, process the first data packet to extract a first identifier (ID1), and determine, based on the first identifier (ID1), whether to activate the RFID receiver (22).

9. The portable electronic device of claim 8, wherein the control unit (23) is configured to deactivate the RFID receiver (22) at a time period after activation and/or when the RFID receiver (22) has received the second data packet.

10. The portable electronic device of claim 8 or 9, wherein the control unit (23) is configured to, upon receiving the second data packet, perform a predefined action as a function of the second data packet.

11. The portable electronic device of claim 10, wherein the control unit (23) is configured to, upon receiving the second data packet, process the second data packet to extract a second identifier (ID2) and perform the predefined action as a function of the second identifier (ID2).

12. The portable electronic device of claim 11, wherein the predefined action comprises one or more of: operating a feedback device (24) on the portable electronic device to present content associated with the second identifier (ID2), or operating a communication device (25) to transmit at least part of the second identifier (ID2) to a computer system (30) over a network (40).

13. A system comprising the portable electronic device of any one of claims 8-12, and the electronic tag (10) of any one of claims 1-7.

14. A method of controlling a portable electronic device, comprising:
operating (501) a Bluetooth receiver on the portable electronic device to receive first data packets transmitted by an electronic tag in accordance with a first wireless short-range communication protocol;
**characterized by** operating (502) the portable electronic device, upon receipt of at least one of the first data packets, to selectively activate an RFID receiver on the portable electronic device for receipt of second data packets transmitted by the electronic tag in accordance with a second wireless short-range communication protocol;
and operating (503) the portable electronic device to perform, upon receipt of at least one of the second data packets, a predefined action as a function of the at least one of the second data packets, wherein the portable electronic device, upon said receipt of said at least one of the first data packets, is operated to process said at least one of the first data packets to extract a first identifier, and determine, based on the first identifier, whether to activate the RFID receiver.

## Patentansprüche

1. Elektronisches Etikett, umfassend:
einen Bluetooth-Sender (11), der funktionsfähig ist, erste Datenpakete zu übertragen;
einen RFID-Sender (12), der funktionsfähig ist, zweite Datenpakete zu übertragen;
wobei die ersten Datenpakete eine erste Kennung (ID1) umfassen und die zweiten Datenpakete eine zweite Kennung (ID2) umfassen und
wobei die erste Kennung (ID1) in der Größe, gegeben durch eine Anzahl von Stellen, kleiner als die zweite Kennung (ID2) ist,
**dadurch gekennzeichnet, dass** die zweite Kennung (ID2) in den ersten Datenpaketen nicht enthalten ist.

2. Elektronisches Etikett nach Anspruch 1, wobei die erste Kennung (ID1) eine allgemeine Kennung für eine Vielzahl von elektronischen Etikette ist und die zweite Kennung (ID1) eine dedizierte Kennung für das elektronische Etikett ist.

3. Elektronisches Etikett nach einem der vorhergehenden Ansprüche, wobei die zweite Kennung (ID2) eine MAC-Adresse umfasst.

4. Elektronisches Etikett nach einem der vorhergehenden Ansprüche, wobei der Bluetooth-Sender (11) einen ersten Bereich für drahtlose Übertragung (TR1) aufweist und der RFID-Sender einen zweiten Bereich für drahtlose Übertragung (TR2) aufweist und wobei der erste Bereich für drahtlose Übertragung (TR1) weniger als das 20-Fache des zweiten Bereichs für drahtlose Übertragung (TR2) beträgt.

5. Elektronisches Etikett nach Anspruch 4, wobei der erste und der zweite Bereich für drahtlose Übertragung (TR1, TR2) weniger als 60 Zentimeter betragen.

6. Elektronisches Etikett nach einem der vorhergehenden Ansprüche, wobei der RFID-Sender (12) betrieben wird, um die zweiten Datenpakete gleichzeitig mit dem oder anschließend an das elektronische/n Etikett, das den Bluetooth-Sender (11) zum Übertragen der ersten Datenpakete betreibt, zu übertragen.

7. Elektronisches Etikett nach einem der vorhergehenden Ansprüche, ferner umfassend einen Näherungssensor (18), konfiguriert zum Detektieren des Vorhandenseins eines Objekts in einer Detektionszone (DZ), wobei das elektronische Etikett eine Steuereinheit (13) umfasst, die mit dem Näherungssensor (18) und dem Bluetooth-Sender (11) verbunden ist und zum selektiven, wenn der Näherungssensor (18) das Vorhandensein des Objekts in der Detektionszone (DZ) detektiert, Aktivieren des Bluetooth-Senders (11) zum Übertragen der ersten Datenpakete konfiguriert ist.

8. Tragbare elektronische Vorrichtung, umfassend:
einen Bluetooth-Empfänger (21), der funktionsfähig ist, ein durch ein elektronisches Etikett (10) übertragenes erstes Datenpaket zu empfangen;
einen RFID-Empfänger (22), der funktionsfähig ist, ein durch das elektronische Etikett (10) übertragenes zweites Datenpaket zu empfangen; und
eine Steuereinheit (23), verbunden mit dem Bluetooth-Empfänger (21) und dem RFID-Empfänger (22),
**dadurch gekennzeichnet, dass** die Steuereinheit (23) konfiguriert ist zum selektiven Aktivieren des RFID-Empfängers (22) nach dem Empfangen des ersten Datenpakets, wobei die Steuereinheit (23) zum, nach dem Empfangen des ersten Datenpakets, Verarbeiten des ersten Datenpaket konfiguriert ist, um eine erste Kennung (ID1) zu extrahieren und basierend auf der ersten Kennung (ID1) zu bestimmen, ob der RFID-Empfänger (22) aktiviert werden soll.

9. Tragbare elektronische Vorrichtung nach Anspruch 8, wobei das Steuereinheit (23) konfiguriert ist zum Deaktivieren des RFID-Empfängers (22) zu einer Zeitperiode nach der Aktivierung und/oder wenn der RFID-Empfänger (22) das zweite Datenpaket empfangen hat.

10. Tragbare elektronische Vorrichtung nach Anspruch 8 oder 9, wobei die Steuereinheit (23) konfiguriert ist zum, nach dem Empfangen des zweiten Datenpakets, Durchführen einer im Voraus definierten Aktion als eine Funktion des zweiten Datenpakets.

11. Tragbare elektronische Vorrichtung nach Anspruch 10, wobei die Steuereinheit (23) konfiguriert ist zum, nach dem Empfangen des zweiten Datenpakets, Verarbeiten des zweiten Datenpakets, um eine zweite Kennung (ID2) zu extrahieren, und zum Durchführen der im Voraus definiertenn Aktion als eine Funktion der zweiten Kennung (ID2) .

12. Tragbare elektronische Vorrichtung nach Anspruch 11, wobei die im Voraus definierte Aktion eines oder mehrere von Folgendem umfasst: Betreiben einer Rückmeldungsvorrichtung (24) an der tragbaren elektronischen Vorrichtung zum Präsentieren von Inhalt, der mit der zweiten Kennung (ID2) assoziiert ist, oder Betreiben einer Kommunikationsvorrichtung (25) zum Übertragen mindestens eines Teils der zweiten Kennung (ID2) an ein Computersystem (30) über ein Netzwerk (40).

13. System, umfassend die tragbare elektronische Vorrichtung nach einem der Ansprüche 8-12 und das elektronische Etikett (10) nach einem der Ansprüche 1-7.

14. Verfahren zum Steuern einer tragbaren elektronischen Vorrichtung, umfassend:
Betreiben (501) eines Bluetooth-Empfängers an der tragbaren elektronischen Vorrichtung zum Empfangen von durch ein elektronisches Etikett gemäß einem ersten Protokoll für drahtlose Kurzbereichskommunikation übertragenen ersten Datenpaketen;
**gekennzeichnet durch** Betreiben (502) der tragbaren elektronischen Vorrichtung, nach dem Empfang mindestens eines der ersten Datenpakete, zum selektiven Aktivieren eines RFID-Empfängers an der tragbaren elektronischen Vorrichtung für Empfang von durch das elektronische Etikett gemäß einem zweiten Protokoll für drahtlose Kurzbereichskommunikation übertragenen zweiten Datenpaketen;
und Betreiben (503) der tragbaren elektronischen Vorrichtung zum Durchführen, nach dem Empfang mindestens eines der zweiten Datenpakete, einer im Voraus definierten Aktion als eine Funktion des mindestens einen der zweiten Datenpakete, wobei die tragbare elektronische Vorrichtung, nach dem Empfang des mindestens einen der ersten Datenpakete, zum Verarbeiten des mindestens einen der ersten Datenpakete betrieben wird, um eine erste Kennung zu extrahieren und basierend auf der ersten Kennung zu bestimmen, ob der RFID-Empfänger aktiviert werden soll.

## Revendications

1. Étiquette électronique, comprenant :
un émetteur Bluetooth (11) qui peut être rendu opérationnel pour émettre des premiers paquets de données ; et
un émetteur RFID (12) qui peut être rendu opérationnel pour émettre des seconds paquets de données ;
dans laquelle les premiers paquets de données comprennent un premier identifiant (ID1) et les seconds paquets de données comprennent un second identifiant (ID2), et
dans laquelle le premier identifiant (ID1) présente une dimension en nombre de bits inférieure à celle du second identifiant (ID2),
**caractérisée en ce que** le second identifiant (ID2) n'est pas inclus dans les premiers paquets de données.

2. Étiquette électronique selon la revendication 1, dans laquelle le premier identifiant (ID1) est un identifiant générique pour une pluralité d'étiquettes électroniques et le second identifiant (ID1) est un identifiant dédié pour l'étiquette électronique.

3. Étiquette électronique selon l'une quelconque des revendications précédentes, dans laquelle le second identifiant (ID2) comprend une adresse MAC.

4. Étiquette électronique selon l'une quelconque des revendications précédentes, dans laquelle l'émetteur Bluetooth (11) présente une première plage d'émission sans fil (TR1) et l'émetteur RFID présente une seconde plage d'émission sans fil (TR2), et dans laquelle la première plage d'émission sans fil (TR1) est inférieure à 20 fois la seconde plage d'émission sans fil (TR2).

5. Étiquette électronique selon la revendication 4, dans laquelle les première et seconde plages d'émission sans fil (TR1, TR2) sont inférieures à 60 centimètres.

6. Étiquette électronique selon l'une quelconque des revendications précédentes, dans laquelle l'émetteur RFID (12) est rendu opérationnel pour émettre les seconds paquets de données concurremment ou subséquemment au fait que l'étiquette électronique rend opérationnel l'émetteur Bluetooth (11) pour émettre les premiers paquets de données.

7. Étiquette électronique selon l'une quelconque des revendications précédentes, comprenant en outre un capteur de proximité (18) configuré pour détecter la présence d'un objet à l'intérieur d'une zone de détection (DZ), dans laquelle l'étiquette électronique comprend une unité de commande (13) qui est connectée au capteur de proximité (18) et à l'émetteur Bluetooth (11) et qui est configurée pour, de façon sélective, lorsque le capteur de proximité (18) détecte la présence de l'objet à l'intérieur de la zone de détection (DZ), activer l'émetteur Bluetooth (11) émettre les premiers paquets de données.

8. Dispositif électronique portable, comprenant :
un récepteur Bluetooth (21) qui peut être rendu opérationnel pour recevoir un premier paquet de données émis par une étiquette électronique (10) ;
un récepteur RFID (22) qui peut être rendu opérationnel pour recevoir un second paquet de données émis par l'étiquette électronique (10) ; et
une unité de commande (23) connectée au récepteur Bluetooth (21) et au récepteur RFID (22) ;
**caractérisé en ce que** l'unité de commande (23) est configurée pour activer sélectivement le récepteur RFID (22) suite à la réception du premier paquet de données, dans lequel l'unité de commande (23) est configurée pour, suite à ladite réception du premier paquet de données, traiter le premier paquet de données pour extraire un premier identifiant (ID1) et pour déterminer, sur la base du premier identifiant (ID1) s'il convient ou non d'activer le récepteur RFID (22).

9. Dispositif électronique portable selon la revendication 8, dans lequel l'unité de commande (23) est configurée pour désactiver le récepteur RFID (22) à une période temporelle après l'activation du et/ou lorsque le récepteur RFID (22) a reçu le second paquet de données.

10. Dispositif électronique portable selon la revendication 8 ou 9, dans lequel l'unité de commande (23) est configurée pour, suite à la réception du second paquet de données, réaliser une action prédéfinie en fonction du second paquet de données.

11. Dispositif électronique portable selon la revendication 10, dans lequel l'unité de commande (23) est configurée pour, suite à la réception du second paquet de données, traiter le second paquet de données pour extraire un second identifiant (ID2) et pour réaliser l'action prédéfinie en fonction du second identifiant (ID2).

12. Dispositif électronique portable selon la revendication 11, dans lequel l'action prédéfinie comprend une ou plusieurs actions parmi : le fait de rendre opérationnel un dispositif de retour (24) sur le dispositif électronique portable pour présenter un contenu associé au second identifiant (ID2) ou le fait de rendre opérationnel un dispositif de communication (25) pour émettre au moins une partie du second identifiant (ID2) sur un système informatique (30) par l'intermédiaire d'un réseau (40).

13. Système comprenant le dispositif électronique portable selon l'une quelconque des revendications 8 à 12 et l'étiquette électronique (10) selon l'une quelconque des revendications 1 à 7.

14. Procédé de commande d'un dispositif électronique portable, comprenant :
le fait de rendre opérationnel (501) un récepteur Bluetooth sur le dispositif électronique portable pour recevoir des premiers paquets de données émis par une étiquette électronique conformément à un premier protocole de communication de plage courte sans fil ;
**caractérisé par** le fait de rendre opérationnel (502) le dispositif électronique portable suite à la réception d'au moins l'un des premiers paquets de données pour activer sélectivement un récepteur RFID sur le dispositif électronique portable pour recevoir des seconds paquets de données émis par l'étiquette électronique conformément à un second protocole de communication de plage courte sans fil ; et
par le fait de rendre opérationnel (503) le dispositif électronique portable pour réaliser, suite à la réception d'au moins l'un des seconds paquets de données, une action prédéfinie en fonction de l'au moins un des seconds paquets de données, dans lequel le dispositif électronique portable, suite à ladite réception dudit au moins un des premiers paquets de données, est activé pour traiter ledit au moins un des premiers paquets de données pour extraire un premier identifiant et pour déterminer, sur la base du premier identifiant, s'il convient ou non d'activer le récepteur RFID.
